# FASCICULE DE BREVET EUROPEEN

(11) **EP 2 165 890 B1**
(45) Date de publication et mention de la délivrance du brevet: **09.11.2011**
(21) Numéro de dépôt: 09169133.7
(22) Date de dépôt: 01.09.2009
(51) Int. Cl.: B60R 19/18, B62D 25/08

(54) **piece de renfort et vehicule comportant une telle piece.**
Verstärkungsstück und Fahrzeug mit einem solchen Stück
Reinforcing part and vehicle comprising such a part.

(30) Priorité: 18.09.2008 FR 0856283
(43) Date de publication de la demande: 24.03.2010
(73) Titulaire: PEUGEOT CITROËN AUTOMOBILES SA, 78140 Velizy-Villacoublay (FR)
(72) Inventeur: Benane, Said, 94550, CHEVILLY LARUE (FR); Roussel, Mathias, 78280, GUYANCOURT (FR)

(56) Documents cités:
- EP-A- 1 623 879
- EP-A1- 1 232 932
- WO-A-2006/100379
- FR-A- 2 910 864

## Description

La présente invention concerne un pare-choc avant comprenant une pièce de renfort et un véhicule comportant un tel pare-choc .

L'invention concerne plus particulièrement une pièce de renfort destinée à la protection d'une pièce de carrosserie d'un véhicule automobile, ladite pièce de renfort comportant au moins une interface de fixation destinée à la solidarisation d'une peau extérieure d'un pare-choc, et comportant un élément avant destiné à être recouvert par la peau extérieure de pare-choc afin d'en augmenter la rigidité, ainsi qu'au moins un élément arrière apte à être relié à la structure du véhicule, ladite interface de fixation étant agencé entre les éléments avant et arrière.

Il est connu des pare-chocs de véhicule automobile comportant une pièce d'aspect, aussi appelée peau de pare-choc, qui est rendue visible de l'extérieure du véhicule et qui recouvre d'autres éléments du pare-choc, tels que des poutres transversales haute et basse qui transmettent l'énergie d'un choc respectivement à haute vitesse et piéton à la partie avant de la structure de caisse du véhicule.

Outre les poutres susmentionnées, le pare-choc est fixé à d'autres points durs de la structure de caisse du véhicule ainsi qu'à des équipements du véhicule comme par exemple, un groupe de refroidissement moteur, des optiques, ou à des pièces de carrosserie telles que des ailes ou un capot moteur. Pour ce faire, le pare-choc comprend une pièce dédiée qui a aussi pour fonction de renforcer la tenue de la peau extérieure du pare-choc. Une telle pièce, que l'on nomme dans ce qui suit pièce de renfort, s'étend de préférence entre une ouverture de passage d'air ménagée dans le pare-choc, permettant le refroidissement du moteur par une circulation d'air, et le capot moteur, c'est-à-dire approximativement au niveau d'une partie supérieure du pare-choc.

La solidarisation entre la peau extérieure et ladite pièce de renfort est réalisée par un moyen de fixation rapide de type à clippage, permettant un montage et un démontage facilité de la peau extérieure de pare-choc, suite à un choc à faible vitesse également nommé choc réparabilité, par exemple.

La Demanderesse a constaté, avec de tels pare-chocs, que le capot moteur qui jouxte la partie supérieure du pare-choc, est détérioré suite à un choc entre le véhicule et un obstacle, même en cas de choc réparabilité. En fait, un phénomène dit de gonflement de la peau extérieure, issu d'une déformation du pare-choc entre des points durs de fixation lors d'un choc, engendre une mise en contact de ce dernier avec le capot moteur. Le document EP 1623 879 11 décrit un pare-choc selon le préambule de la revendication 1.

Un but de la présente invention est de pallier tout ou partie des inconvénients de l'art antérieur relevés ci-dessus.

A cette fin, le pare-choc avant selon l'invention d'un véhicule automobile comprend une peau extérieure et une pièce de renfort destinés à s'étendre transversalement entre les ailes avant et les optiques avant, et longitudinalement dans le prolongement du capot moteur du véhicule automobile, ladite pièce de renfort comportant dans sa partie centrale au moins une interface de fixation destinée à la solidarisation de la peau extérieure du pare-choc, et comportant un élément avant destiné à être recouvert par la peau extérieure de pare-choc afin d'en augmenter la rigidité, ainsi qu'au moins un élément arrière apte à être relié à la structure du véhicule, ladite interface de fixation étant agencé entre les éléments avant et arrière, ladite pièce comprenant au moins une butée au déplacement de la peau de pare-choc, chaque butée étant solidaire de l'interface de fixation en faisant saillie hors de cette dernière, la butée "étant située au prolongement de l'élément arrière, formant une continuité de ligne perpendiculaire à ladite interface de fixation, un tel agencement augmentant de la rigidité de la butée.

Par ailleurs, la pièce de renfort selon l'invention peut comporter l'une ou plusieurs des caractéristiques suivantes :
- la butée est située au prolongement de l'élément arrière, formant une continuité de ligne perpendiculaire à ladite interface de fixation, un tel agencement augmentant de la rigidité de ladite butée,
- la butée s'étend parallèlement à une partie arrière dudit élément avant, la butée étant destinée à interdire le déplacement de la peau extérieure de pare-choc selon la flèche F orientée vers le capot,
- l'élément avant comprend au moins un logement ouvert sur l'extérieur, ledit logement étant destiné à absorber une quantité d'énergie d'une choc entre le véhicule et un obstacle externe au véhicule, par déformation de la peau extérieure dans au moins un logement,
- chaque logement est de forme sensiblement tronconique,
- l'élément avant comprend au moins un trou débouchant disposé en périphérie de chaque logement afin d'affaiblir la résistance de la pièce de renfort au niveau d'une partie inférieure par rapport au logement,
- chaque logement comprend au moins un trou débouchant pratiqué en zone inférieure d'une paroi longitudinale du logement et destiné à la déformation d'au moins une partie de l'élément avant inférieure au logement, selon une rotation vers le bas autour d'un axe transversal,
- l'élément avant comprend une zone centrale comprenant au moins un logement, et des zones d'extrémité latérale de rigidité plus élevée que celle de ladite zone centrale,
- la butée, les éléments avant et arrière ainsi que l'interface de fixation forment une pièce réalisée d'un seul tenant à partir d'un matériau plastique chargé en fibre de verre.

Par ailleurs, l'invention a trait à un véhicule comportant un pare-choc avant s'étendant transversalement entre des ailes avant de carrosserie et des optiques avant, et longitudinalement au prolongement d'un capot moteur, ledit pare-choc comprenant une peau extérieure et une pièce de renfort comportant tout ou partie des caractéristiques susmentionnées.

D'autres avantages et particularités de l'invention ressortent de la description de modes de réalisation faite ci-après en référence aux dessins annexés dans lesquels :

la figure 1 est une vue de face surélevée d'un avant de véhicule automobile, selon l'invention,

la figure 2 représente une pièce de renfort utilisée sur le véhicule de la figure 1, la pièce de renfort étant représentée seule selon une vue de dessus,

la figure 3 est une vue de face de la pièce de renfort de la figure 2,

la figure 4 est une vue en coupe longitudinale représentant de façon très schématique l'agencement d'une partie de la pièce de renfort par rapport à des pièces environnantes qui lui sont rattachées, selon l'invention,

la figure 5 est un agrandissement d'une zone d'affaiblissement de la pièce de renfort des figures 2 et 3.

Dans ce qui suit, le terme « droite », « gauche », « avant » ou « arrière » associé à une pièce s'étend par rapport à un sens normal de fonctionnement du véhicule, tandis que le terme « intérieur » ou « extérieur » rattaché à une pièce se comprend comme une orientation de cette pièce par rapport à l'habitacle du véhicule.

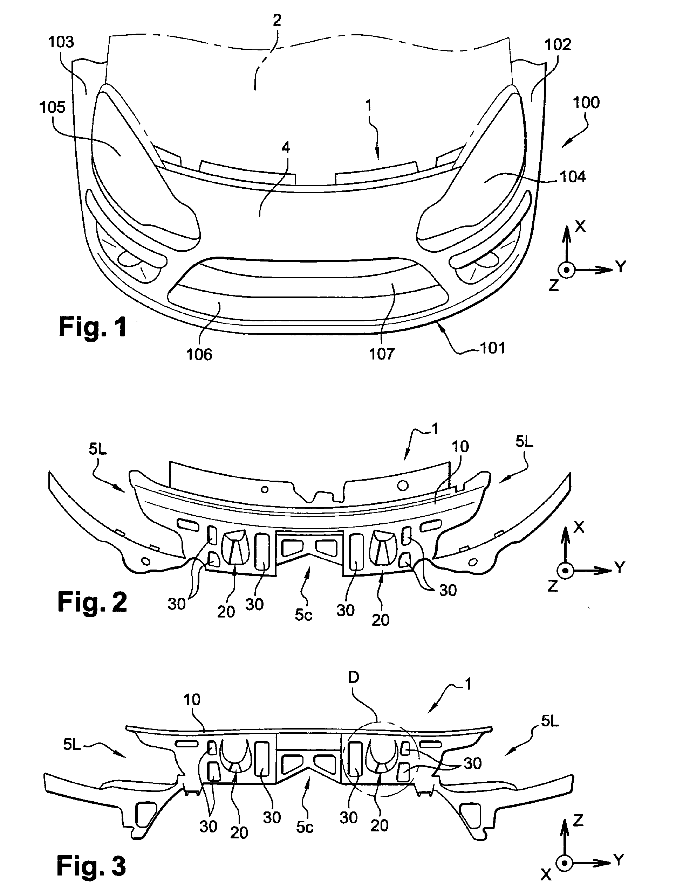

En se reportant à la figure 1, le véhicule prenant le repère général 100 se compose d'un pare-choc 101 que l'on assimile à une pièce de structure du véhicule du fait qu'elle comporte au moins un élément de transfert d'efforts d'un choc qui n'est pas rendu visible étant donné sa disposition à l'intérieur du pare-choc. Le pare-choc 101 est aussi assimilable à une pièce de carrosserie étant donné qu'il est rendu visible de l'extérieur du véhicule et qu'il s'étend transversalement entre des ailes avant 102 et 103 délimitant un passage de roue, entre des optiques avant 104 et 105, et longitudinalement au prolongement d'un capot 2 moteur, délimité en trait mixte sur la figure 1.

Le pare-choc comprend en outre en sa partie médiane une ouverture 106 destinée au passage de l'air nécessaire au refroidissement du moteur et du circuit de climatisation.

Une poutre transversale 107 de pare-choc est rendu visible de l'extérieur du véhicule, s'étendant au travers de l'ouverture 106.

Un tel pare-choc 101 comprend une peau extérieure 4 et une pièce de renfort 1 permettant de lier ensemble la peau extérieure 4 aux pièces susmentionnées du véhicule. Ladite pièce 1 de renfort est une pièce d'interconnexion destinée à la fixation du capot 2 moteur par l'intermédiaire d'une serrure non représentée. La pièce 1 de renfort est aussi destinée à la fixation des ailes latérales droite et gauche qui sont fixées à chacune de ses extrémités latérales, ainsi qu'à la fixation de la peau extérieure 4 de pare-choc qui est fixée, en partie centrale, de manière démontable au moyen d'une fixation rapide de type à clip ou tout autre équivalent. Pour ce faire, la pièce de renfort 1 est une pièce suffisamment rigide, réalisée à partir d'un matériau plastique chargé en fibre de verre à hauteur de 20% de sa composition totale.

En outre, la pièce de renfort 4 comprend une butée 10, des éléments avant 5 et arrière 6, ainsi que l'interface de fixation 3 destinée à la fixation de la peau extérieure 4 de pare-choc. La butée 10, les éléments avant et arrière ainsi que l'interface de fixation 3 sont obtenues par un procédé de moulage afin de former une pièce 4 réalisée d'un seul tenant.

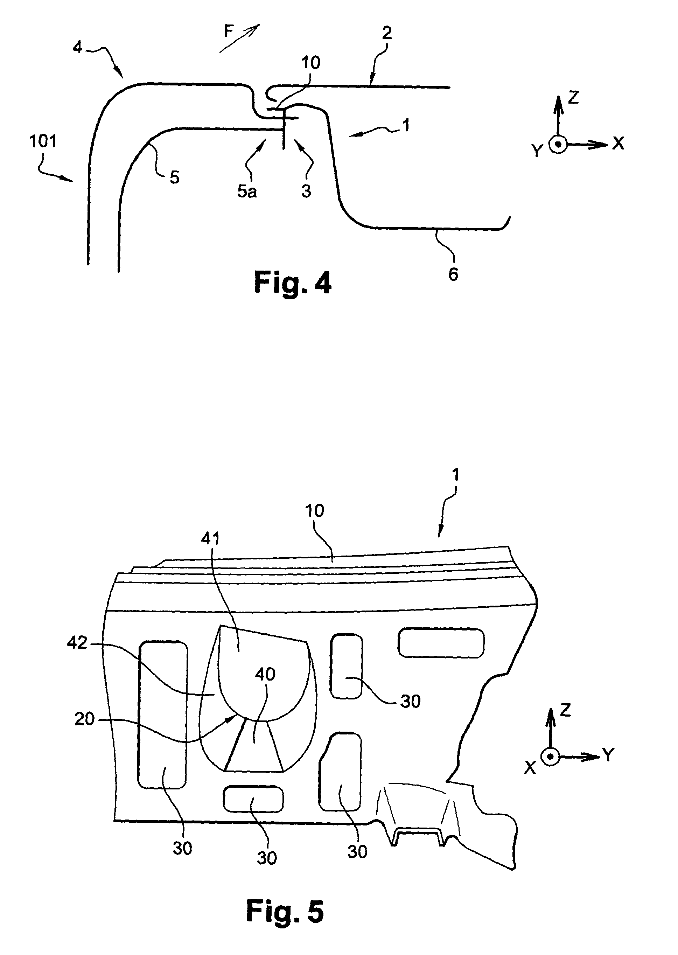

La butée 10 est destinée à limiter le déplacement de la peau extérieure 4 selon la flèche F représentée sur la figure 4, mais aussi la rotation de la peau 4 autour d'un axe Y. Pour ce faire, la butée 10 est une cloison sensiblement plane, du moins de forme complémentaire à celle de l'extrémité arrière de la peau 4 contre laquelle elle est en appui. La butée 10 est assimilable à une casquette de retenue faisant saillie vers l'avant hors d'une paroi verticale d'axe Z définissant l'interface de fixation 3 de la peau extérieure 4 à la pièce de renfort 1. La butée 10 s'étend vers l'avant, depuis l'extrémité supérieure de l'interface de fixation 3.

La butée 10 comprend selon un premier mode de réalisation une cloison unique s'étendant perpendiculairement à l'interface de connexion 3, le long de cette dernière, et selon un second mode de réalisation par segments de cloison s'étendant transversalement les uns au prolongement des autres, et perpendiculairement le long de tout ou partie de l'interface de connexion 3.

L'élément avant 5 de la pièce de renfort s'étend, comme son nom l'indique vers l'avant, depuis la partie inférieure de l'interface de fixation 3. L'élément avant 5 comprend une partie arrière 5a s'étendant parallèlement à la butée 10, de sorte qu'ensemble, ces deux pièces forment des butées respectivement inférieure et supérieure au déplacement vertical de la peau extérieure 4.

C'est aussi ensemble que ces deux pièces définissent deux points de contact avec la peau 4 extérieure, limitant ainsi sa rotation par rapport à un axe Y qui provoquerait un déplacement selon la flèche F.

L'élément avant 5 qui est rendu visible de face sur la figure 3, est de forme sensiblement complémentaire à celle de la peau extérieure 4 que cette dernière recouvre. La peau extérieure 4 est donc apte à venir en appui contre l'élément avant 5 lors d'un choc entre le véhicule et un obstacle externe au véhicule.

L'élément arrière 6 s'étend au prolongement de la butée 10, vers l'arrière de cette dernière, formant ainsi une continuité de ligne entre la butée 10 et l'élément 6. L'élément 6 est relié au niveau d'une extrémité opposée à la serrure (non représentée) de capot 2 et à un groupe moto-ventilateur (non représenté) comportant au moins un échangeur thermique compris dans un circuit de refroidissement, qu'il s'agisse de celui du moteur ou de la climatisation.

L'élément arrière 6 s'étend ainsi au prolongement direct de la butée 10, selon un axe longitudinal X ce qui augmente d'autant la tenue à la déformation de la butée 10 en cas de choc frontal.

L'interface de fixation 3 est définie par des ouvertures non représentées, pratiquées sur la paroi verticale liant la butée 10 à l'élément avant 5. Chaque ouverture est destinée à recevoir et maintenir en X un clip de fixation, au tout autre moyen équivalent, rendu solidaire de la peau extérieure 4.

Selon un autre mode de réalisation de l'invention, la pièce de renfort 1 comprend un autre moyen de protection du capot 2 qui vient en complément de celui formé par la butée 10.

L'autre moyen de protection est formé par au moins un logement 20 ménagé sur la pièce de renfort 1, plus particulièrement au niveau de l'élément avant 5 situé directement au droit de la peau extérieure 4 du pare-choc, qui est susceptible de venir en contact avec un obstacle extérieur au véhicule lors d'un choc.

De préférence, la pièce de renfort 1 comprend symétriquement à l'axe médian au véhicule, plusieurs logements 20. Chacun de ces logements 20 est délimité de préférence par une paroi de fond 41 qui relie au moins une paroi périphérique 42 de forme sensiblement circulaire ou ovoïde. L'extrémité avant de la paroi 42 débouche sur une ouverture pratiquée en direction de l'extérieur du véhicule, et au travers de laquelle la peau 4 extérieure est apte à s'étendre lors d'un choc.

Dans un mode préféré de réalisation, le logement 20 est de forme sensiblement tronconique, la base définissant ladite ouverture. Avec une telle ouverture, chaque logement 20 est apte à recevoir la peau extérieure 4 de pare-choc, ce qui permet d'absorber une partie du gonflement de la peau extérieure 4.

Afin d'augmenter encore plus la protection du capot 2 contre toute déformation provoquée par sa mise en appui avec la peau extérieure 4 de pare-choc, la paroi périphérique 42 du logement 20 comprend au moins un trou débouchant qui est destiné à la déformation d'une partie inférieure de l'élément avant 5, selon une rotation de cette partie vers le bas autour d'un axe transversal Y au véhicule.

Pour rendre encore plus facile la rotation susmentionnée, la pièce 1 de renfort comprend au moins un trou 30 débouchant disposé en périphérie de chaque logement 20 afin d'en affaiblir la résistance à la déformation et provoquer celle de ladite partie inférieure de la pièce de renfort qui est délimité à partir du logement 20.

Sur la figure 5, qui est un agrandissement de la zone D de la figure 3, le logement 20 comprend en sa périphérie extérieure un trou gauche, deux trous droits et un trou inférieur. Par symétrie, le logement 20 situé à gauche et rendu visible aux figures 2 et 3, est entouré du même nombre de trous, à la symétrie près par rapport à un plan X - Z médian.

C'est ainsi que les trous 30 et 40 débouchant rendent la partie centrale 5C de la pièce de renfort 1 moins résistante à la déformation, par rapport aux parties latérales 5L. De préférence, la partie centrale 5C s'étend transversalement au droit d'une zone d'un pare-choc qui est directement contigüe selon l'axe X d'une extrémité avant du capot 2 à protéger.

## Revendications

1. Pare-choc avant (101) d'un véhicule automobile comprenant une peau extérieure (4) et une pièce de renfort (1) destinés à s'étendre transversalement entre les ailes avant (102, 103) et les optiques avant (104, 105), et longitudinalement dans le prolongement du capot (2) monteur dudit véhicule automobile, ladite pièce de renfort comportant dans sa partie centrale au moins une interface de fixation (3) destinée à la solidarisation de la peau extérieure (4) de pare-choc, et comportant un élément avant (5) destiné à être recouvert par la peau extérieure (4) de pare-choc afin d'en augmenter la rigidité, ainsi qu'au moins un élément arrière (6) apte à être relié à la structure du véhicule, ladite interface de fixation (3) étant agencé entre les éléments avant et arrière (5,6), ladite pièce (1) comprenant au moins une butée (10) au déplacement de la peau de pare-choc, chaque butée (10) étant solidaire de ladite interface de fixation (3) en faisant saillie hors de cette dernière, **caractérisée en ce** la butée (10) est située au prolongement de l'élément arrière (6), formant une continuité de ligne perpendiculaire à ladite interface de fixation (3), un tel agencement augmentant de la rigidité de ladite butée.

2. Pare-choc avant selon la revendication 1, **caractérisée en ce que** la butée (10) s'étend parallèlement à une partie arrière (5A) dudit élément avant, la butée (10) étant destinée à interdire le déplacement de la peau extérieure (4) de pare-choc selon la flèche F orientée vers le capot (2).

3. Pare-choc avant selon la revendication 1 ou 2, **caractérisée en ce que** l'élément avant (5) comprend au moins un logement (20) ouvert sur l'extérieur, ledit logement (20) étant destiné à absorber une quantité d'énergie d'une choc entre le véhicule et un obstacle externe au véhicule, par déformation de la peau extérieure (4) dans au moins un logement (20).

4. Pare-choc avant selon la revendication 3, **caractérisée en ce que** chaque logement (20) est de forme sensiblement tronconique.

5. Pare-choc avant selon la revendication 3 ou 4, **caractérisée en ce que** l'élément avant (5) comprend au moins un trou (30) débouchant disposé en périphérie de chaque logement (20) afin d'affaiblir la résistance de la pièce de renfort au niveau d'une partie inférieure par rapport au logement (20).

6. Pare-choc avant selon l'une quelconque des revendications 3 à 5, **caractérisée en ce que** chaque logement (20) comprend au moins un trou (40) débouchant pratiqué en zone inférieure d'une paroi longitudinale (42) du logement et destiné à la déformation d'au moins partie de l'élément avant inférieure au logement (20), selon une rotation vers le bas autour d'un axe transversal (Y).

7. Pare-choc avant selon l'une quelconque des revendications 3 à 6, **caractérisée en ce que** l'élément avant (5) comprend une zone centrale (5C) comprenant au moins un logement (20), et des zones d'extrémité latérale (5L) de rigidité plus élevée que celle de ladite zone centrale (5C).

8. Pare-choc avant selon l'une quelconque des revendications 1 à 7, **caractérisée en ce que** la butée (10), les éléments avant et arrière (5, 6) ainsi que l'interface de fixation (3) forment une pièce réalisée d'un seul tenant à partir d'un matériau plastique chargé en fibre de verre.

9. Véhicule (100) comportant un pare-choc (101) avant selon l'une quelconque des revendications 1 à 8.

## Claims

1. Front bumper (101) of a motor vehicle comprising an outer skin (4) and a reinforcing part (1) intended to extend transversely between the front wings (102, 103) and the front headlights (104,105), and longitudinally in the extension of the engine bonnet (2) of said motor vehicle, said reinforcing part comprising in its central portion at least one attachment interface (3) for connecting the outer skin (4) of the bumper, and comprising a front element (5) intended to be covered by the outer skin (4) of the bumper in order to increase the rigidity thereof, and at least one rear element (6) capable of being connected to the structure of the vehicle, said attachment interface (3) being arranged between the front and rear elements (5,6), said reinforcing part (1) comprising at least one stop (10) for the movement of the bumper skin, each stop (10) being integral with said attachment interface (3) and projecting out therefrom, **characterised in that** the stop (10) is located at the extension of the rear element (6), forming a continuous line perpendicular to said attachment interface (3), an arrangement of this type increasing the rigidity of said stop.

2. Front bumper according to claim 1, **characterised in that** the stop (10) extends parallel to a rear portion (5A) of said front element, the stop (10) being intended to prevent the movement of the outer skin (4) of the bumper according to the arrow F in the direction of the bonnet (2).

3. Front bumper according to either claim 1 or claim 2, **characterised in that** the front element (5) comprises at least one housing (20) which is open to the outside, said housing (20) being intended to absorb a quantity of energy resulting from a collision between the vehicle and an obstacle outside the vehicle, by deformation of the outer skin (4) in at least one housing (20).

4. Front bumper according to claim 3, **characterised in that** each housing (20) is substantially in the shape of a truncated cone.

5. Front bumper according to either claim 3 or claim 4, **characterised in that** the front element (5) comprises at least one through hole (30) arranged at the periphery of each housing (20) in order to reduce the strength of the reinforcing part in a lower portion in relation to the housing (20).

6. Front bumper according to any one of claims 3 to 5, **characterised in that** each housing (20) comprises at least one through hole (40) made in the lower region of a longitudinal wall (42) of the housing and intended for the deformation of at least a portion of the lower front element of the housing (20), according to a downwards rotation about a transverse axis (Y).

7. Front bumper according to any one of claims 3 to 6, **characterised in that** the front element (5) comprises a central region (5C) comprising at least one housing (20), and lateral end regions (5L) having a greater rigidity than that of said central region (5C).

8. Front bumper according to any one of claims 1 to 7, **characterised in that** the stop (10), the front and rear elements (5, 6) and the attachment interface (3) form a part produced in one piece from a plastics material reinforced with glass fibre.

9. Vehicle (100) comprising a front bumper (101) according to any one of claims 1 to 8.

## Patentansprüche

1. Vorderer Stoßfänger (101) eines Kraftfahrzeugs, umfassend eine Außenschicht (4) und ein Verstärkungsteil (1), die dazu gedacht sind, sich quer zwischen den vorderen Kotflügeln (102, 103) und den vorderen Scheinwerfern (104, 105) und in Längsrichtung in der Verlängerung der Motorhaube (2) des Kraftfahrzeugs zu erstrecken, wobei das Verstärkungsteil in seinem mittleren Teil mindestens eine Befestigungsschnittstelle (3), die zur festen Verbindung der Stoßfänger-Außenschicht (4) gedacht ist und ein vorderes Element (5) umfasst, das dazu gedacht ist, von der Stoßfänger-Außenschicht (4) bedeckt zu sein, um seine Steifigkeit zu erhöhen, sowie mindestens ein hinteres Element (6), das dazu geeignet ist, um mit der Struktur des Fahrzeugs verbunden zu werden, umfasst, wobei die Befestigungsschnittstelle (3) zwischen den vorderen und hinteren Elementen (5, 6) angeordnet ist, wobei das Teil (1) mindestens einen Anschlag (10) für die Verschiebung der Stoßfängerschicht umfasst, wobei jeder Anschlag (10) mit der Befestigungsschnittstelle (3) fest verbunden ist, indem er aus dieser heraus vorsteht, **dadurch gekennzeichnet, dass** der Anschlag (10) sich in der Verlängerung des hinteren Elements (6) befindet und dabei eine linienförmige Kontinuität bildet, die zur Befestigungsschnittstelle (3) rechtwinklig ist, wobei eine derartige Anordnung die Steifigkeit des Anschlags erhöht.

2. Vorderer Stoßfänger nach Anspruch 1, **dadurch gekennzeichnet, dass** der Anschlag (10) sich parallel zu einem hinteren Teil (5A) des vorderen Elements erstreckt, wobei der Anschlag (10) dazu gedacht ist, die Verschiebung der Stoßfänger-Außenhaut (4) an dem Pfeil F entlang, welcher der Motorhaube (2) zugewandt ist, zu untersagen.

3. Vorderer Stoßfänger nach Anspruch 1 oder 2, **dadurch gekennzeichnet, dass** das vordere Element (5) mindestens eine nach außen offene Aufnahme (20) umfasst, wobei die Aufnahme (20) dazu gedacht ist, eine Energiemenge eines Aufpralls zwischen dem Fahrzeug und einem Hindernis außerhalb des Fahrzeugs durch Verformung der Außenschicht (4) in mindestens eine Aufnahme (20) zu absorbieren.

4. Vorderer Stoßfänger nach Anspruch 3, **dadurch gekennzeichnet, dass** jede Aufnahme (20) im Wesentlichen kegelstumpfförmig ist.

5. Vorderer Stoßfänger nach Anspruch 3 oder 4, **dadurch gekennzeichnet, dass** das vordere Element (5) mindestens ein Durchgangsloch (30) umfasst, das am Umfang jeder Aufnahme (20) angeordnet ist, um den Widerstand des Verstärkungsteils an einem unteren Teil im Verhältnis zu der Aufnahme (20) zu schwächen.

6. Vorderer Stoßfänger nach einem der Ansprüche 3 bis 5, **dadurch gekennzeichnet, dass** jede Aufnahme (20) mindestens ein Durchgangsloch (40) umfasst, das im unteren Bereich einer Längswand (42) der Aufnahme eingerichtet ist und zur Verformung mindestens eines Teils des vorderen Elements unterhalb der Aufnahme (20) in einer Drehung nach unten um eine Querachse (Y) herum gedacht ist.

7. Vorderer Stoßfänger nach einem der Ansprüche 3 bis 6, **dadurch gekennzeichnet, dass** das vordere Element (5) eine mittlere Zone (5C) umfasst, die mindestens eine Aufnahme (20) und seitliche Endzonen (5L) von höherer Steifigkeit als die der mittleren Zone (5C) umfasst.

8. Vorderer Stoßfänger nach einem der Ansprüche 1 bis 7, **dadurch gekennzeichnet, dass** der Anschlag (10), die vorderen und hinteren Elemente (5, 6) sowie die Befestigungsschnittstelle (3) ein Teil bilden, das aus einem glasfaserverstärkten Kunststoff einteilig ausgebildet ist.

9. Fahrzeug (100), umfassend einen vorderen Stoßfänger (101) nach einem der Ansprüche 1 bis 8.
